# EUROPÄISCHE PATENTANMELDUNG

(11) **EP 1 138 927 A2**
(43) Veröffentlichungstag der Anmeldung: **04.10.2001**
(21) Anmeldenummer: 01107129.7
(22) Anmeldetag: 22.03.2001
(51) Int. Cl.: F02M 25/07

(54) **Turboaufgeladene Brennkraftmaschine mit Abgasrückführung**

(30) Priorität: 29.03.2000 US 537358
(71) Anmelder: DEERE & COMPANY, Moline, Illinois 61265-8098 (US)
(72) Erfinder: Whiting, Todd Mathew, Waterloo, IA 50701 (US); Eng, James Alan, Jr., Cedar Falls, IA 50613 (US)
(74) Vertreter: Magin, Ludwig Bernhard

(57) **Zusammenfassung**

Brennkraftmaschinen, insbesondere Diesel-Brennkraftmaschinen weisen häufig Abgasrückführungssysteme auf, um den im Abgas enthaltenen Anteil an Stickoxiden zu reduzieren. Bekannte Abgasrückführungssysteme führen häufig zu einem erhöhten Kraftstoffverbrauch.

Es wird eine Brennkraftmaschine (10) mit einem Abgasrückführungssystem vorgeschlagen, welche einen günstigen Kraftstoffverbrauch aufweist.

## Beschreibung

Die Erfindung betrifft eine Brennkraftmaschine mit wenigstens einer Verbrennungskammer, einem Zylinderkopf, mit wenigstens einem der Verbrennungskammer zugeordneten Einlaßanschluß und einem Auslaßanschluß, jeweils wenigstens einem Einlaßventil und einem Auslaßventil, einem Auslaßkrümmer, der mit dem Auslaßanschluß in Verbindung steht, einem Ansaugrohr, das mit dem Einlaßanschluß in Verbindung steht, einem Turbolader und einem Abgasrückführungssystem.

Bei Brennkraftmaschinen ist es bekannt, eine Rückführung von durch die Brennkraftmaschinen abgegebenen Abgasen zu einem Einlaß und in Verbrennungskammern zusammen mit Luft und Kraftstoff vorzusehen, um die Verbrennungstemperatur herabzusetzen und somit die Menge an Stickoxiden in den abgegebenen Abgasen herabzusetzen.

Es wurden in der Hauptsache zwei Möglichkeiten zur Durchführung einer Abgasrückführung zur Verwendung mit turbogeladenen Diesel-Brennkraftmaschinen vorgeschlagen. In der ersten Möglichkeit wird Abgas von einem Turbinenausgang zu einem Verdichtereingang geleitet. Diese Anordnung weist den Nachteil auf, daß das Verdichterrad sowie das Gehäuse durch Abgasrückstände verschmutzt werden, das Verdichterrad möglicherweise überhitzt wird und die Möglichkeit einer ernsthaften Verschmutzung eines Luftkühlers bestehen kann. In der zweiten Möglichkeit, welche beispielsweise in der US-A-6,003,315 beschrieben wird, wird Abgas von einem Auslaßkrümmer vor einer Turboladerturbine direkt in den Antriebslufteinlaß bzw. ein Ansaugrohr geleitet (wodurch das Verschmutzungspotential der ersten Anordnung vermieden wird). Diese Anordnung wiederum weist den Nachteil auf, daß der Druck in dem Auslaßkrümmer größer sein muß als der Druck in dem Ansaugrohr. Die meisten hochentwickelten Diesel-Brennkraftmaschinen für Schwerlast mit Turbolader arbeiten mit Einlaßdrücken, die höher sind als die Auslaßdrücke. Dies bedingt teilweise die gute Kraftstoffökonomie-Charakteristik dieser Diesel-Brennkraftmaschinen. Um zu bewirken, daß der Auslaßdruck höher ist als der Einlaßdruck, muß eine verhältnismäßig ineffiziente Turboladerkonfiguration mit der Brennkraftmaschine verbunden sein oder es muß eine Druckhalteeinrichtung im Anschluß an die Turboladerturbine vorgesehen sein. Für jeden dieser Typen von Rückführungseinrichtungen ist eine schlechte Kraftstoffökonomie zu erwarten.

Das der Erfindung zugrunde liegende Problem wird darin gesehen, daß bekannte Abgasrückführungssysteme zu einer Beeinträchtigung anderer Komponenten einer Brennkraftmaschine bzw. zu einem hohen Kraftstoffverbrauch führen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Brennkraftmaschine mit einer Anordnung zur Verfügung gestellt, die es dem Einlaßdruck ermöglicht, höher als der Auslaßdruck zu verbleiben. Dies wird dadurch erreicht, daß ein separater Abgasrückführungskrümmer und ein zusätzliches Auslaßventil für jede Verbrennungskammer vorgesehen ist, auf das hier als zweites Auslaßventil Bezug genommen wird, welches einen Durchgang von Abgas von der Verbrennungskammer zu dem Abgasrückführungskrümmer erlaubt. Das zweite Auslaßventil kann durch mechanische, hydromechanische oder elektro-hydromechanische Aktuatoren bzw. Mittel derart betätigt werden, daß das zweite Auslaßventil als Funktion der Rotationsstellung der Kurbelwelle der Brennkraftmaschine geöffnet und geschlossen werden kann. Das Öffnen des zweiten Auslaßventils findet während des Arbeitshubs des Antriebszyklus statt, nachdem der Verbrennungsprozeß abgeschlossen ist. Das zweite Auslaßventil wird an einem Punkt in der Nähe des Öffnens des ersten Auslaßventils geschlossen.

Abgas tritt von dem Abgasrückführungskrümmer in das Ansaugrohr oder in einen anderen Kanal für unter Druck stehende Luft stromabwärts des Turboladerverdichters aus. Ein Auslaß von Abgas wird durch ein Abgasrückführungsventil zur Verfügung gestellt, das derart gesteuert wird, daß in dem Abgasrückführungskrümmer ein Druck erzeugt und auf ein höheres Niveau gebracht wird, als es in jedem Moment in dem Ansaugrohr auftritt. Das Abgasrückführungsventil kann gesteuert werden, so daß die Menge an Abgasen, die in das Ansaugrohr eingebracht wird, über einen weiten Durchflußbereich gesteuert werden kann, wie es zur Erzielung einer optimalen Emissionsreduzierung und einem minimalen Nachteil an Kraftstoffverbrauch gewünscht wird. Das Abgasrückführungsventil kann durch eine Antriebssteuerungseinheit (ECU) bzw. eine elektronische Einheit gesteuert werden.

In dem Abgasrückführungssystem kann ein Bremsventil vorgesehen sein, das den Abgasrückführungskrümmer und den Auslaßkrümmer verbindet. Wenn das Bremsventil in einer geöffneten Stellung gehalten wird und das Abgasrückführungsventil geschlossen ist, kann das zweite Auslaßventil in jeder Verbrennungskammer am Anfang des Arbeitshubes geöffnet und am Ende des Arbeitshubes geschlossen werden, so daß eine Motorbremsung (decompression braking) erzielt wird.

Mit dem Abgasrückführungssystem der vorliegenden Erfindung können der Abgaskrümmer und der Turbolader mit derselben Effizienz arbeiten, wie sie für gängige aufgeladene Antriebe ohne Abgasrückführungssystem charakteristisch ist. Es wird angenommen, daß eine Brennkraftmaschine mit einem solchen System im Vergleich mit Antrieben mit anderen, bekannten Abgasrückführungssystemen mit einer besseren Kraftstoffausbeute arbeitet.

An dem Auslaß des Abgasrückführungskrümmers können auch zwei Abgasrückführungsventile vorgesehen sein. Eines der Ventile erlaubt es, daß Abgas in das Ansaugrohr geleitet wird, ohne einen Kühler zu passieren. Dies wird es der Diesel-Brennkraftmaschine erlauben, bei niedrigeren Umgebungstemperaturen zu starten und sich schneller zu erwärmen als Brennkraftmaschinen ohne solche steuerbaren Abgasrückführungssysteme.

In der Zeichnung ist ein nachfolgend näher beschriebenes Ausführungsbeispiel der Erfindung dargestellt. Es zeigt:
- Fig. 1: eine schematische Darstellung einer Brennkraftmaschine mit einem Abgasrückführungssystem,
- Fig. 2: eine schematische Schnittdarstellung durch einen Zylinderkopf und eine Verbrennungskammer einer Brennkraftmaschine entsprechend Fig. 1,
- Fig. 3: ein Schaubild des Druckes in der Verbrennungskammer gegenüber einem Kurbelwellenwinkel, welches das Öffnen und Schließen des Ventils während einer Abgasrückführung darstellt,
- Fig. 4: ein Schaubild, das den Ventilhub gegenüber dem Kurbelwellenwinkel für drei verschiedene Ventile der Brennkraftmaschine darstellt und
- Fig. 5: ein Schaubild des Druckes in der Verbrennungskammer gegenüber dem Kurbelwellenwinkel, daß das Öffnen und Schließen des Ventils während einer Motorbremsung illustriert.

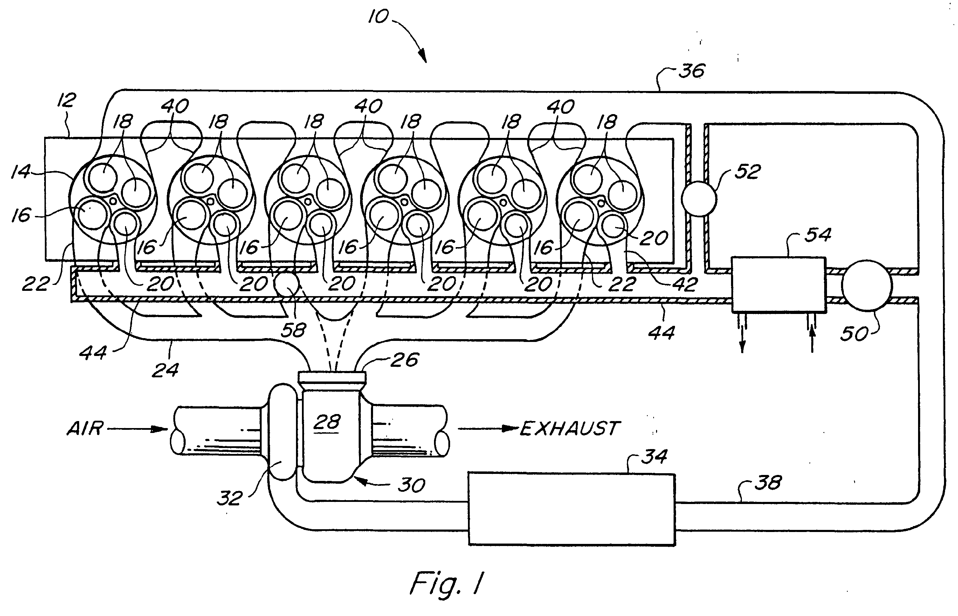

Eine mehrzylindrige, turbogeladene Diesel-Brennkraftmaschine mit einem Abgasrückführungssystem entsprechend der vorliegenden Erfindung wird schematisch in Fig. 1 gezeigt und allgemein mit 10 bezeichnet. Die Diesel-Brennkraftmaschine 10 weist einen Zylinderkopf 12 auf, der wenigstens ein erstes Auslaßventil 16, zwei Einlaßventile 18 und ein zweites Auslaßventil 20 für jeden der Zylinder oder Verbrennungskammern 14 umfaßt. Während die dargestellte Brennkraftmaschine 10 zwei Einlaßventile 18 und ein erstes Auslaßventil 16 aufweist, sollte es deutlich sein, daß das Abgasrückführungssystem der vorliegenden Erfindung an Brennkraftmaschinen mit jeder Anzahl von Einlaß- und ersten Auslaßventilen verwendet werden kann.

Abgas strömt von jeder Verbrennungskammer 14 durch einen ersten Auslaßanschluß 22 in dem Zylinderkopf 12 zu einem Auslaßkrümmer 24. Von dort strömt das Abgas durch einen Auslaßeingang 26 zu einer Turbine 28 eines Turboladers 30. Der Turbolader 30 weist einen Luftverdichter 32 auf, welcher unter Druck stehende Frischluft durch einen Kühler 34 über eine Verbindungsleitung 38 an ein Ansaugrohr 36 zur Verfügung stellt. Von dem Ansaugrohr 36 gelangt die Luft durch einen Einlaßanschluß 40 in dem Zylinderkopf 12 in die Verbrennungskammern 14.

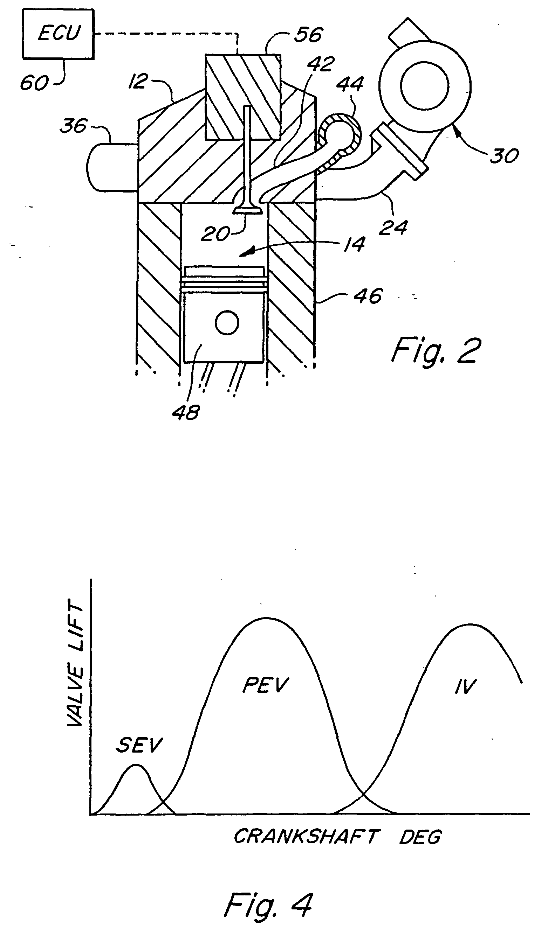

Ein zweiter Abgasstrom wird durch die zweiten Auslaßventile 20 und die zugeordneten Auslaßanschlüsse 42 in dem Zylinderkopf 12 erzeugt. Der Abgasstrom durch die zweiten Auslaßventile 20 wird in einem zweiten Auslaßkrümmer gesammelt, auf den hier als Abgasrückführungskrümmer 44 Bezug genommen wird. Das zweite Auslaßventil 20 wird in Fig. 2 zusammen mit dem Zylinderkopf 12, einem Zylinderblock 46 und einem in dem Zylinder oder der Verbrennungskammer 14 alternierenden Kolben 48 gezeigt.

Wiederum mit Bezug auf Fig. 1 kann das in dem Abgasrückführungskrümmer 44 gesammelte Abgas in den Einlaßluftstrom in der Verbindungsleitung 38 oder in dem Ansaugrohr 36 durch Betätigung eines oder beider Abgasrückführungsventile 50 und 52 eingeführt werden. Die Abgasrückführungsventile 50, 52 können einer von verschiedenen bekannten Typen von Abgasrückführungsventilen sein. Es kann sich um EIN/AUS-Ventile oder lineare Ventile handeln, die zu variablen Gasdurchstromraten in Abhängigkeit von dem verwendeten Abgasrückführungsschema fähig sind. Abgas, das durch das Abgasrückführungsventil 50 strömt, gelangt auch durch einen Abgaskühler 54, der entweder durch Luft oder durch Motor- bzw. Antriebskühlmittel gekühlt wird. Dies kühlt die Temperatur des Abgases, bevor das Abgas mit der Einlaßluft vermischt wird.

Das Abgasrückführungssystem kann auch mit einem zusätzlichen Abgasrückführungsumgehungsventil oder Bremsventil 58 versehen sein. Bei dem Bremsventil 58 handelt es sich um ein Durchflußsteuerungsventil wie ein Scheibenventil. Das Bremsventil 58, erlaubt es Abgasen, wenn es geöffnet ist, direkt von dem Abgasrückführungskrümmer 44 zu dem Auslaßkrümmer 24 zu gelangen. Das Bremsventil 58 wird in Verbindung mit dem Betrieb des zweiten Auslaßventils 20 und einem Schließen der Abgasrückführungsventile 50 und 52 während eines Antriebsbetriebsmodus verwendet, der als "Motorbremsung (decompression braking)" bekannt ist, wie er untenstehend beschrieben wird.

Die zweiten Auslaßventile 20 werden durch Aktuatoren 56 betätigt, die ein Öffnen und Schließen der Auslaßventile 20 als Funktion der Rotationsstellung einer Antriebskurbelwelle ermöglichen. Darüber hinaus steuert eine elektronische Antriebssteuerungseinheit bzw. Einheit (ECU) 60 elektronisch die Aktuatoren 56. Die Aktuatoren 56 können durch jeden aus einer Vielzahl mechanischer, hydromechanischer oder elektrohydromechanischer Aktuatoren gebildet werden, die es erlauben, daß ein Öffnen und Schließen des zweiten Einlaßventils 20 variabel gesteuert wird, wie es unten beschrieben ist. Beispielsweise kann der Aktuator 56 ein elektromechanischer, variabler Ventilaktuator von dem Typ wie er in dem US Patent 5,515,818 beschrieben wird oder ein hydraulisch betriebener Ventilaktuator von dem Typ sein, wie er in dem US Patent No. 5,058,614 gezeigt und beschrieben wird. Die Abgasrückführungsventile 50 und 52 und das Bremsventil 58 werden ebenfalls elektronisch durch die elektronische Einheit 60 gesteuert. Jedes dieser Abgasrückführungs- und Bremsventile 50, 52, 58 kann unabhängig durch die elektronische Einheit 60 geregelt werden.

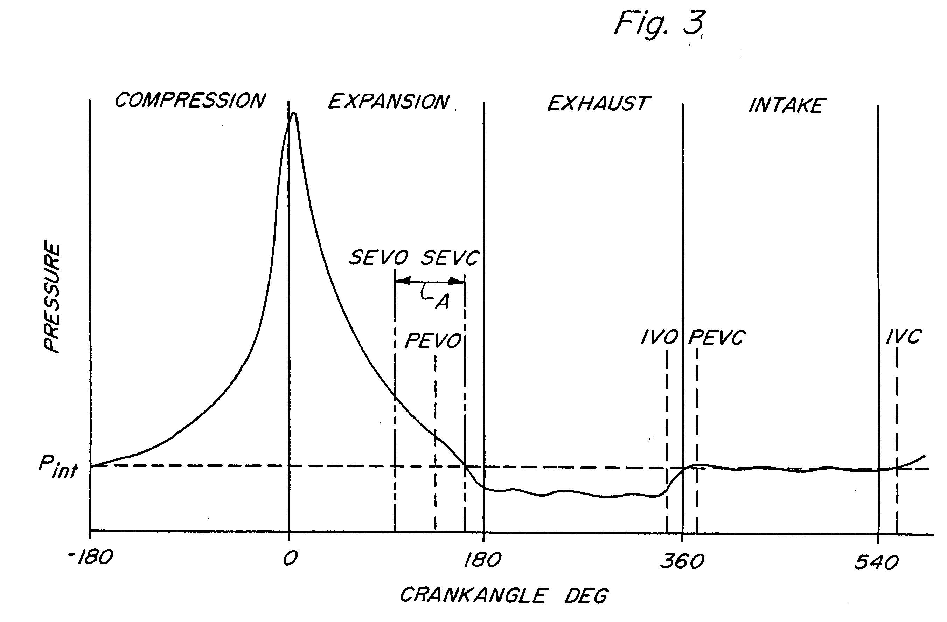

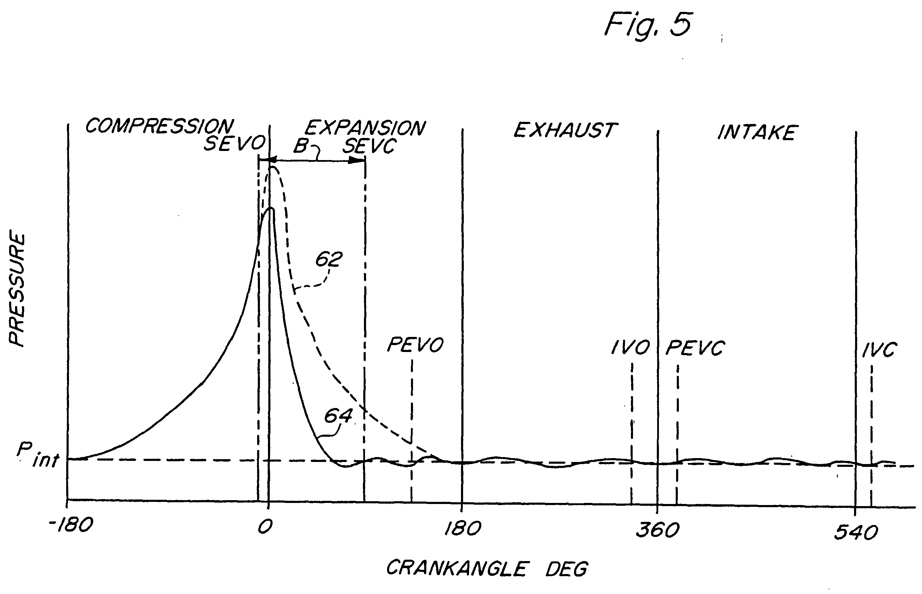

In einem ersten Betriebsmodus der Brennkraftmaschine 10 werden die Ventile gesteuert, um eine Abgasrückführung zu erzielen. Dies resultiert in der Lieferung von Abgas von dem Abgassystem zu dem Ansaugrohr 36 zur Vermischung mit der Einlaßluft und Lieferung an die Verbrennungskammern 14. Das Öffnen und Schließen der zweiten Auslaßventile 20 ist eine Funktion der Kurbelwellenstellung, wie sie in Fig. 3 gezeigt wird. Ein Öffnen des zweiten Auslaßventils 20 tritt während des Ausschiebehubs des Antriebszyklus, das heißt während der Kolben 48 sich nach unten in Richtung dessen, was in der Technik als der untere Totpunkt bezeichnet wird, bewegt. Dies wird in Fig. 3 durch zwei vertikale Linien gezeigt, die mit "SEVO" für "Öffnen des zweiten Auslaßventils" und "SEVC" für "Schließen des zweiten Auslaßventils" bezeichnet sind. Die zweiten Auslaßventile 20 sind über einen Bereich von Kurbelwellenwinkeln geöffnet, der mit A bezeichnet ist. Das zweite Auslaßventil 20 wird vor dem Öffnen des/der ersten Auslaßventils/e 16 geöffnet. Das zweite Auslaßventil 20 ist geöffnet, wenn der Druck des Abgases in der Verbrennungskammer 14 größer ist als der Druck in dem Ansaugrohr 36, wie es durch die horizontale Linie Pᵢₙₜ in Fig. 3 dargestellt wird. Das Öffnen und Schließen des ersten Auslaßventils 16 wird durch die Linien "PEVO" und "PEVC" angegeben, während das Öffnen und Schließen des Einlaßventils 18 durch die Linien "IVO" und "IVC" gekennzeichnet wird. Die Hubhöhe aller drei Ventile, des ersten Auslaßventils 16, des zweiten Auslaßventils 20 sowie des Einlaßventils 18, wird in Fig. 4 dargestellt.

Das zweite Auslaßventil 20 wird über eine genau angegebene Zeitdauer offen gehalten und dann durch die elektronische Einheit 60 geschlossen. Mit Bezug auf das Öffnen des ersten Auslaßventils 16 kann das Schließen des zweiten Auslaßventils 20, so wie in Fig. 3 dargestellt, erfolgen, in welcher das zweite Auslaßventil 20 nach dem Öffnen des ersten Auslaßventils 16 schließt, oder das zweite Auslaßventil 20 kann zur gleichen Zeit oder vor dem Öffnen des ersten Auslaßventils 16 schließen. Ein Abgasstrom von der Verbrennungskammer 14 zu dem Abgasrückführungskrümmer 44 kann sich während dieser Zeitdauer fortsetzen, während das zweite Auslaßventil geöffnet ist, oder das Abgas kann aufhören zu strömen, wenn der augenblickliche Druck in dem Abgasrückführungskrümmer 44 gleich dem augenblicklichen Druck in der Verbrennungskammer 14 ist.

Die elektronische Einheit 60 steuert auch das Öffnen und Schließen der Abgasrückführungsventile 50 und 52 wie auch des Bremsventils 58. Die Stellung der Abgasrückführungsventile 50, 52 und des Bremsventils 58 können derart programmiert werden, daß in dem Abgasrückführungskrümmer 44 ein Druck erzeugt, aufrechterhalten und gesteuert wird. Der Druck in dem Abgasrückführungskrümmer 44 wird von der Rate an Gas, die in den Abgasrückführungskrümmer 44 eintritt, gegenüber der Rate mit welcher es Gas erlaubt ist, den Abgasrückführungskrümmer 44 bei der augenblicklichen Stellung der Abgasrückführungsventile 50, 52 und des Bremsventils 58 zu verlassen, abhängig sein. Durch ein Aufrechterhalten eines Drucks in dem Abgasrückführungskrümmer 44 der größer ist als der Druck in dem Ansaugrohr 36, wird Abgas in das Ansaugrohr 36 strömen, wenn eines oder beide der Abgasrückführungsventile 50, 52 geöffnet ist/sind.

Während eines Abgasrückführungsmodus wird das Bremsventil 58 in seiner geschlossenen Stellung gehalten, um einen Abgasstrom von dem Abgasrückführungskrümmer 44 zu dem Auslaßkrümmer 24 zu verhindern. Bei einem ersten Einführen einer Abgasrückführung, ohne die Verwendung des Abgaskühlers 54, wird das Abgasrückführungsventil 50 in seiner geschlossenen Stellung gehalten. Der Druck in dem Abgasrückführungskrümmer 44 wird durch die ECU 60 über eine Steuerung der Stellung des Abgasrückführungsventils 52 gesteuert. Das Abgasrückführungsventil 52 erlaubt es Abgas, den Abgaskühler 54 bei einem Kaltstart oder zur schnelleren Antriebserwärmung zu umgehen. Das Abgasrückführungsventil 52 ist daher auch als Kaltstartabgasrückführungsventil bekannt. Im zweiten Fall der Einführung einer Abgasrückführung, die eine Verwendung des Abgaskühlers 54 einschließt, wird das Abgasrückführungsventil 52 in seiner geschlossenen Stellung gehalten. Der Druck in dem Abgasrückführungskrümmer 44 wird durch die elektronische Einheit 60 durch die Steuerung der Stellung des Abgasrückführungsventils 50 gesteuert.

In einem zweiten Betriebsmodus werden die Ventile gesteuert, um eine Motorbremsung (decompression braking) zu erzielen. Eine Einführung einer Motorbremsung wird bewirkt, indem die Abgasrückführungsventile 50, 52 in der geschlossenen Stellung gehalten werden, während das Bremsventil 58 sich in der offenen Stellung befindet. Das zweite Auslaßventil 20 jeder Verbrennungskammer 14 wird dann als Funktion der Rotationsstellung der Kurbelwelle, wie in Fig. 5 im Bereich B dargestellt, geöffnet und geschlossen. Ein Öffnen des zweiten Auslaßventils 20 tritt an einer Rotationsstellung der Kurbelwelle auf, die annähernd mit der oberen Totpunkt-Stellung des Kolbens 48 am Ende des Verdichtungstaktes korrespondiert.

Ein Schließen des zweiten Auslaßventils 20 wird durch die elektronische Einheit 60 so gesteuert, daß es in der Nähe der unteren Totpunkt-Stellung des Kolbenweges stattfindet. Der Öffnungs- und Schließvorgang des zweiten Auslaßventils 20 wird bewirken, daß der Druck, der sich in der Verbrennungskammer 14 während des Verdichtungshubs aufbaut, über den Abgasrückführungskrümmer 44 zu dem Auslaßkrümmer 24 ausgestoßen wird, bevor das Gas in der Verbrennungskammer 14 ausgedehnt werden kann. Daher übersteigt die durch den das Gas komprimierenden Kolben 48 geleistete Arbeit stark die Menge an Arbeit, die durch das Gas auf den Kolben 48 während des Ausdehnungs- bzw. Arbeitshubs aufgebracht wird, was in der Fähigkeit der Brennkraftmaschine 10 resultiert, kinetische Energie zu absorbieren.

In Fig. 5 zeigt die unterbrochene Linie 62 einen typischen Verbrennungskammerdruck während eines normalen Antriebbetriebs der Brennkraftmaschine 10. Die durchgezogene Linie 64 illustriert den Verbrennungskammerdruck während eines Motorbremsbetriebs. Das Schließen des zweiten Auslaßventils 20 kann jederzeit während des Arbeitshubs stattfinden, nachdem der Verbrennungskammerdruck auf oder unter den Ansaugrohrdruck gesunken ist. Dies kann vor der unteren Totpunktstellung des Kolbens 48 auftreten.

Die elektronische Steuerung des zweiten Auslaßventils 20 befähigt das Öffnen und das Schließen der zweiten Auslaßventile 20 dazu, zu unterschiedlichen Zeiten in dem Antriebszyklus basierend auf dem Antriebsbetriebsmodus stattzufinden. Darüber hinaus kann die zeitliche Abfolge des Öffnens und Schließens der zweiten Auslaßventile 20 während des Abgasrückführungsbetriebs variiert werden, um die Emissionsreduzierung bei einer Minimierung des Kraftstoffverbrauchnachteils zu optimieren.

Das Abgasrückführungssystem der vorliegenden Erfindung befähigt die Brennkraftmaschine 10, derart gesteuert zu werden, daß eine optimale Emissionsreduzierung bei einer Minimierung des Kraftstoffverbrauchnachteils erzielt wird. Die Nachteile bekannter Abgasrückführungssysteme für turbogeladene Diesel-Brennkraftmaschinen wurden vermieden. Das Abgasrückführungssystem der vorliegenden Erfindung kann auch für turbogeladene, fremdgezündete Brennkraftmaschinen anwendbar sein.

Die Erfindung soll nicht durch die vorstehend beschriebene Ausführungsform sondern ausschließlich durch die folgenden Ansprüche begrenzt werden.

## Patentansprüche

1. Brennkraftmaschine (10) mit wenigstens einer Verbrennungskammer (14), einem Zylinderkopf (12) mit wenigstens einem der Verbrennungskammer (14) zugeordneten Einlaßanschluß (40) und einem Auslaßanschluß (22, 42) jeweils wenigstens einem Einlaßventil (18) und einem Auslaßventil (16), einem Auslaßkrümmer (24), der mit dem Auslaßanschluß (42) in Verbindung steht, einem Ansaugrohr (36), das mit dem Einlaßanschluß (40) in Verbindung steht, einem Turbolader (30) und einem Abgasrückführungssystem, **dadurch gekennzeichnet, daß** der Zylinderkopf (12) zumindest einen zweiten Auslaßanschluß(42) mit einem zweiten Auslaßventil (20) aufweist, welcher mit einem Abgasrückführungskrümmer (44) in Verbindung steht, welcher über ein Abgasrückführungsventil (50, 52) an das Ansaugrohr (36) angeschlossen ist, wobei das zweite Auslaßventil (20) während eines Arbeitshubs der Brennkraftmaschine (10) geöffnet wird, wenn der Druck in der Verbrennungskammer (14) den Druck in dem Ansaugrohr (36) übersteigt, und später während des Arbeitshubs geschlossen wird.

2. Brennkraftmaschine nach Anspruch 1, **dadurch gekennzeichnet, daß** das zweite Auslaßventil (20) geschlossen wird, nachdem das erste Auslaßventil (16) geöffnet ist.

3. Brennkraftmaschine nach Anspruch 1 oder 2, **dadurch gekennzeichnet, daß** zumindest das zweite Auslaßventil (20) durch eine elektronische Einheit (60) vorzugsweise variierbar steuerbar ist.

4. Brennkraftmaschine nach einem oder mehreren der vorherigen Ansprüche, **dadurch gekennzeichnet, daß** der Abgasrückführungskrümmer (44) und der Auslaßkrümmer (24) über wenigstens ein Bremsventil (58) verbindbar sind.

5. Brennkraftmaschine nach einem oder mehreren der vorherigen Ansprüche, **gekennzeichnet durch** einen Abgaskühler (54), der vorzugsweise stromaufwärts des Abgasrückführungsventils (50) angeordnet ist.

6. Brennkraftmaschine nach Anspruch 5, **gekennzeichnet durch** ein zweites Abgasrückführungsventil (52), daß stromaufwärts des Abgaskühlers (54) angeordnet ist.

7. Brennkraftmaschine nach einem oder mehreren der Ansprüche 4 bis 6, **dadurch gekennzeichnet**, das/die Abgasrückführungsventil(e) (50, 52) bzw. das Bremsventil (58) durch eine elektronische Einheit (60) vorzugsweise variierbar ansteuerbar sind.

8. Brennkraftmaschine nach einem oder mehreren der vorherigen Ansprüche, die als Diesel-Brennkraftmaschine ausgebildet ist.
